# EUROPEAN PATENT SPECIFICATION

(11) **EP 1 940 747 B1**
(45) Date of publication and mention of the grant of the patent: **01.09.2010**
(21) Application number: 05817366.7
(22) Date of filing: 24.10.2005
(51) Int. Cl.: C03B 40/04, C03B 35/24

(54) **LIFT JET NOZZLE TRANSFERRING OF GLASS SHEETS AND JOB SWITCHING**
HEBESTRAHLDÜSENTRANSFER VON GLASPLATTEN UND JOBWECHSEL
BUSETTE DE JET ÉLÉVATEUR TRANSFÉRT DE FEUILLES DE VERRE ET PERMUTATION DE TRAVAUX

(43) Date of publication of application: 09.07.2008
(73) Proprietor: Glasstech, Inc., Perrysburg, Ohio 43551 (US)
(72) Inventor: LEWANDOWSKI, Troy, R., Maumee, OH 43537 (US)
(74) Representative: Higgs, Jonathan
(86) International application number: PCT/US2005/038309
(87) International publication number: WO 2007/050053

(56) References cited:
- JP-A- 2002 173 332
- US-A- 4 204 854
- US-A- 4 222 763
- US-A- 5 147 439
- US-A- 5 336 288

## Description

### BACKGROUND OF THE INVENTION

### 1. Field of the Invention

This invention relates to a method for performing switching between glass sheet transfer jobs used in cyclically forming first and second glass sheets of different shapes, and the invention also relates to a method and apparatus for transferring glass sheets of a selected shape from a roll conveyor to a downwardly facing surface of an upper support located above the roll conveyor.

### 2. Background Art

One way in which glass sheets are formed is by heating on a conveyor and then conveying the heated glass sheet to below an upper support to which it is lifted upwardly by a lift jet nozzle assembly in preparation for bending. See, for example, United States Patents: 4,202,854 McMaster et al. and 4,222,763 McMaster which are assigned to the assignee of the present invention. The upper support can be a mold about which the heated glass sheet is formed or can be a flat surface that transfers the heated glass sheet to another mold as disclosed by the McMaster and McMaster et al. patents. Conventionally, a lift jet nozzle assembly of the required shape for each glass sheet shape is fabricated and installed to provide the glass sheet lifting whether to a mold or to a flat surface for subsequent transfer to another mold. Such individual lift jet assemblies necessarily involve manufacturing cost as well as installation time during job switching.

Also known in the prior art is JP 2002-173332 and US 5147439 each disclosing jetting nozzles for glass sheet production.

### SUMMARY OF THE INVENTION

One object of the present invention is to provide an improved method for performing one glass sheet transfer job used in cyclically forming first glass sheets of one shape and then switching to another glass sheet transfer job used in cyclically forming second glass sheets of another shape.

In carrying out the above object, each glass sheet transfer job is performed by cyclically conveying the glass sheets on a roll conveyor to above a lift jet nozzle assembly that is located below the conveyed glass sheet and has lift jet nozzles with vertical nozzle openings through which pressurized gas can be supplied upwardly to provide upward transfer of the glass sheet from the roll conveyor to a downwardly facing surface of an upper support located above the conveyor. Plugs are inserted in lift jet nozzles which are not required to supply pressurized gas to provide the upward transfer of the first glass sheet shape of the one glass sheet transfer job which can then be completed after cyclically transferring the number of glass sheets required. Thereafter plugs are removed from any plugged lift jet nozzles that are required to supply pressurized gas to provide the upward transfer of the second glass sheets and plugs are added to any unplugged lift jet nozzles that are not required to supply pressurized gas to provide the upward transfer of the second glass sheets.

In performing the above method plugs are supplied to lift jet nozzles located outside the perimeter of the shape of glass sheets being transferred for each job, and plugs may be also supplied to certain of the lift jet nozzles located inside the perimeter of the shape of glass sheets being transferred for at least one of the jobs.

Another object of the present invention is to provide an improved method for cyclically transferring heated glass sheets of a selected shape from a roll conveyor to a downwardly facing surface of an upper support located above the roll conveyor.

The improved method of the immediately preceding object is performed by conveying each heated glass sheet on the roll conveyor to above a lift jet nozzle assembly located below the conveyed glass sheet and having lift jet nozzles with vertical nozzle openings through which pressurized gas can be supplied upwardly to provide the transfer of the glass sheet from the roll conveyor to the downwardly facing surface of the upper support. Furthermore, plugs are supplied to selected lift jet nozzles for which there is no need to supply upward gas flow for the selected shape of the glass sheet to be transferred whereby there is no unnecessary upward flow of pressurized gas.

In performing this method, the plugs are supplied to lift jet nozzles outside the perimeter of the selected shape of glass sheets being transferred and may also be supplied to certain of the lift jet nozzles located inside the perimeter of the selected shape of glass sheets being transferred. Also, this method is performed by feeding the pressurized gas to lift jet nozzle arrays of the lift jet nozzle assembly through a plurality of conduits.

One way of performing the method utilizes the lift jet nozzle assembly to form the heated glass sheet about a curved mold surface of the upper support, while another way of performing the method utilizes the lift jet nozzle assembly to transfer the heated glass sheet to a flat transfer surface of the upper support.

In performing the method, the plugs are each inserted through a plug hole that extends in a transverse direction to the vertical nozzle opening of the associated lift jet nozzle.

Another object of the present invention is to provide improved apparatus for cyclically transferring heated glass sheets of a selected shape from a roll conveyor to a downwardly facing surface of an upper support located above the roll conveyor.

The improved apparatus of the immediately preceding object includes a lift jet nozzle assembly located below a plane of conveyance of the conveyed glass sheets and has a plurality of arrays of lift jet nozzles with vertical nozzle openings through which pressurized gas can be supplied upwardly to provide the transfer of each heated glass sheet from the roll conveyor to the downwardly facing surface of the upper support. The lift jet nozzle assembly also includes a plurality of conduits through which pressurized gas is respectively fed to the lift jet nozzle arrays. The apparatus also includes plugs that close certain nozzles for which there is no need to supply upward gas flow for the selected shape of the heated glass sheets to be transferred whereby there is no unnecessary upward flow of pressurized gas.

The glass sheet transferring apparatus may have plugs positioned in lift jet nozzles located outside the perimeter of the selected shape of glass sheets being transferred and may also have plugs positioned in certain of the lift jet nozzles located inside the perimeter of the selected shape of glass sheets being transferred.

One construction of the apparatus has the upper support including a curved mold surface about which the lift jet nozzle assembly forms the glass sheet, while another construction of the apparatus has the upper support including a flat transfer surface to which the lift jet assembly transfers the glass sheet.

The apparatus is disclosed with each lift jet nozzle including a plug hole that extends in a transverse direction to the vertical nozzle opening through which the pressurized gas is supplied by the lift jet nozzle, and each plug is embodied by a pin that is inserted through the plug hole to plug the vertical nozzle opening.

The objects, features and advantages of the present invention are readily apparent from the following detailed description of the preferred embodiments for carrying out the invention when taken in connection with the accompanying drawings.

### BRIEF DESCRIPTION OF THE DRAWINGS

FIGURE 1 is an elevational view of a glass sheet transfer station including apparatus of the invention for performing methods of the invention in connection with transferring heated glass sheets from a roll conveyor to an upper support with the upper support shown having a curved shape about which the glass sheet is also formed.
FIGURE 2 is an elevational view similar to Figure 1 of another embodiment of the apparatus wherein the upper support has a flat surface to which the glass sheet is transferred in preparation for further processing.
FIGURE 3 is a half sectional view of a lift jet nozzle of a lift jet nozzle array utilized to provide the upward transfer of glass sheets in accordance with the invention.
FIGURE 4 is a view similar to Figure 3 of a lift jet nozzle which includes a plug for preventing upward gas flow at each lift jet nozzle that is not required for the particular shape of the glass sheet to be transferred.
FIGURE 5 is a top plan view of a lift jet nozzle assembly taken along the direction of line 5-5 in Figure 1 and showing a first glass sheet of one shape that is transferred upwardly with the schematically filled in lift jet nozzles operable and the others supplied with the plugs as shown in Figure 4 to prevent unnecessary upward flow of pressurized gas.
FIGURE 6 is a top plan view of the lift jet nozzle assembly similar to Figure 5 but showing a second glass sheet of another shape with the marked lift jet nozzle assemblies operable and the others supplied with plugs as shown in Figure 4 to prevent unnecessary upward flow of pressurized gas.

### DETAILED DESCRIPTION OF THE PREFERRED EMBODIMENTS

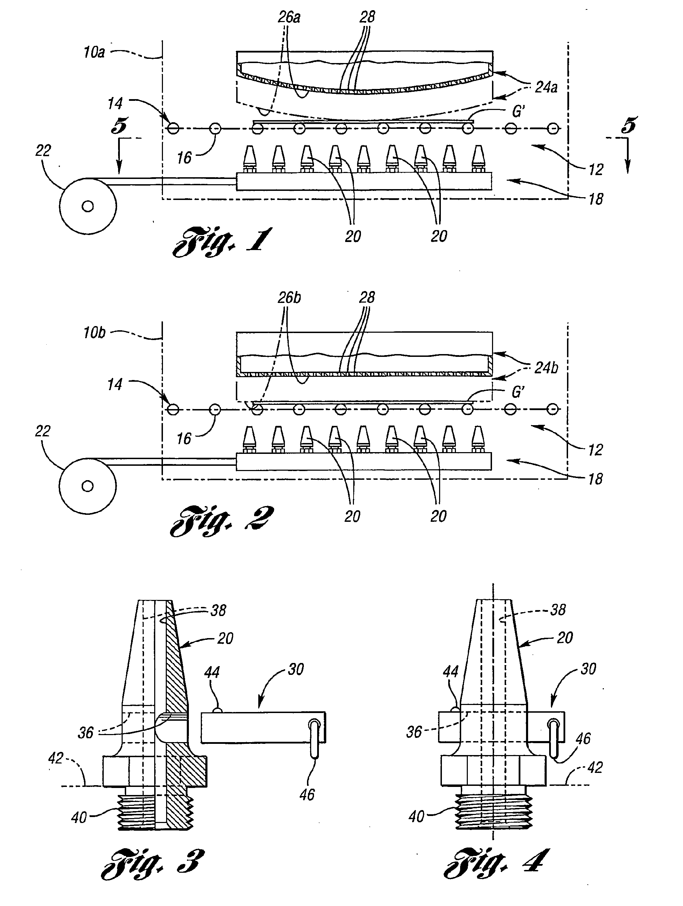

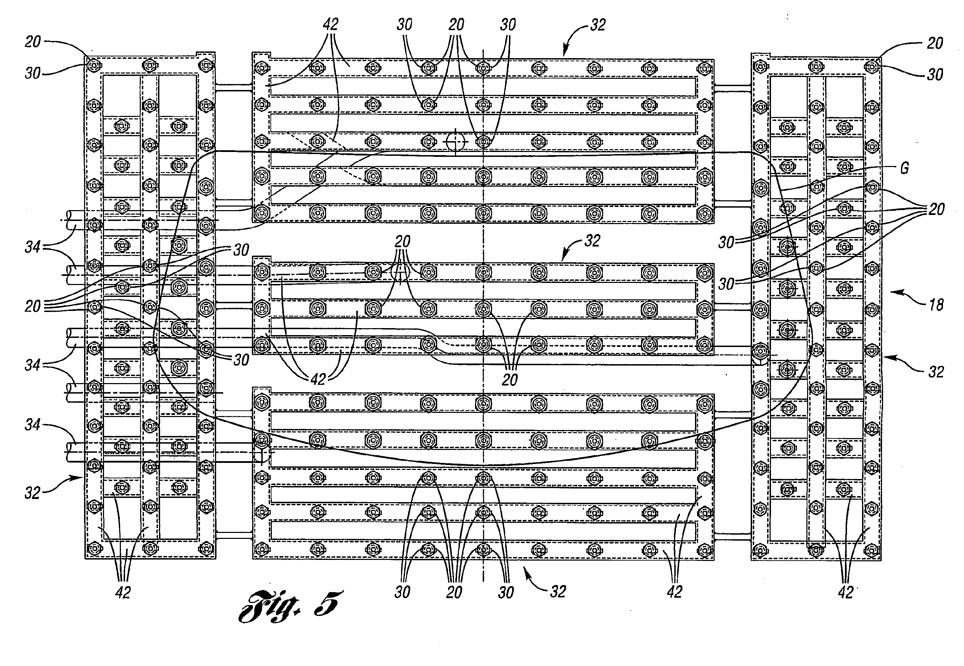

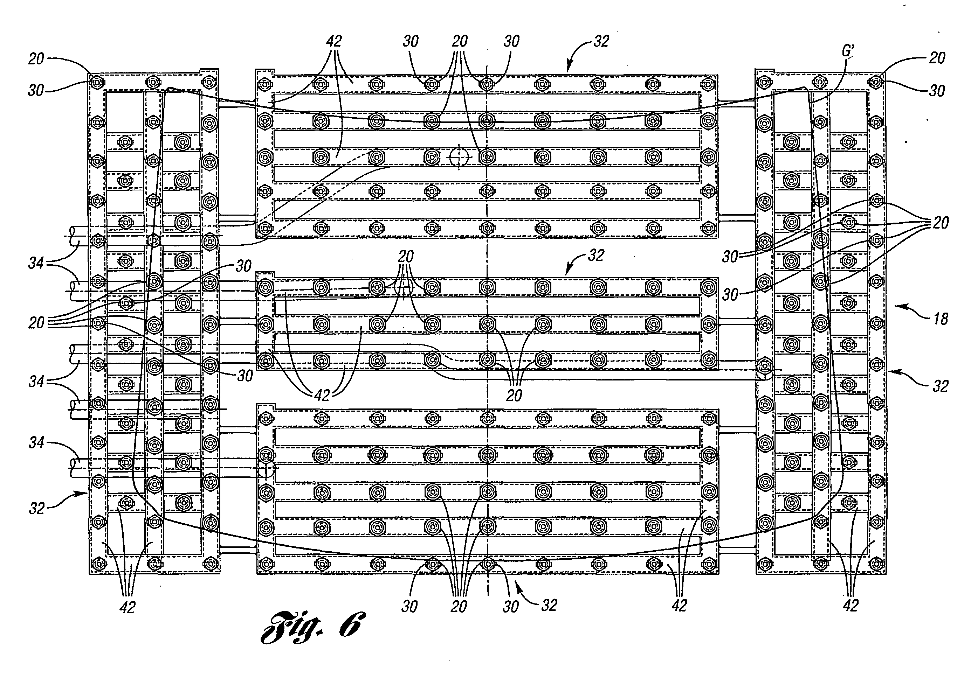

With reference to Figures 1 and 2 of the drawings, two different embodiments of glass sheet transfer station are respectively illustrated and identified by reference numerals 10a and 10b. Each of these transfer stations includes glass sheet transfer apparatus 12 according to the invention as is hereinafter more fully described along with the differences between the two stations. The construction of the apparatus 12, the glass sheet transfer method performed by the apparatus, and the manner in which job switching can be performed between glass sheets of different shapes as illustrated in Figures 5 and 6 will all be described in an integrated manner to facilitate an understanding of all aspects of the invention.

Each of the transfer stations 10a and 10b includes a roll conveyor 14 having rolls 16 on which heated glass sheets G are conveyed into the associated transfer station for the transfer operation. A lift jet nozzle assembly 18 of each transfer station is located below the roll conveyor 14 and includes a plurality of lift jet nozzles 20 for supplying upward gas flow to the heated glass sheet G conveyed into the transfer station. Pressurized gas is supplied to the nozzles 20 from a suitable source 22 as is hereinafter more fully described.

The transfer stations 10a and 10b illustrated in Figures 1 and 2 each include an associated upper support 24a and 24b supported above the roll conveyor 14 and having a downwardly facing surface 26a and 26b. The upward gas flow from the associated lift jet nozzle assembly 18 of each transfer station transfers the glass sheet G upwardly to the upper support surface 26a or 26b. It is possible for the upper supports 24a and 24b to be moved downwardly as shown by phantom line representation to adjacent the conveyor 14 to facilitate the transfer and then moved back upwardly in preparation for further processing, specifically transfer to a forming mold. With the transfer station 10a, the upper support 24a has its downwardly facing surface 26a provided with a curved shape so that the upward gas flow from the lift jet nozzle assembly 18 will also commence forming of the glass sheet to its curved shape, while the flat surface 26b of the transfer station 10b maintains the glass sheet planar in preparation for forming on a mold to which the glass sheet is transferred. Each of the upper supports 24a and 24b is disclosed as having its downwardly facing surface 26a or 26b provided with openings 28 through which a vacuum is drawn in order to support the glass sheet received from the conveyor. This vacuum may be drawn at an initial greater vacuum that provides the initial support and a subsequent lesser vacuum that prevents deformation of the heated glass sheet at the openings. Furthermore, it is possible to subsequently provide a pressurized gas to the openings so as to facilitate the transfer from the associated upper support to another mold for forming or delivery.

As illustrated in Figures 3 and 4, plugs 30 are inserted into selected lift jet nozzles 20 which are not required to supply pressurized gas to provide the upward transfer of the glass sheet shape for each glass sheet transfer job. These plugs 30, as are hereinafter more described, prevent any upward gas flow from the plugged nozzle and thereby conserve the energy of pressurizing gas that would otherwise be fed to that nozzle. This construction permits the lift jet nozzle assembly 18 to be utilized with different glass sheet shapes while still providing an efficient conveyor to upper support transfer operation.

With reference to Figures 5 and 6, these views illustrate the lift jet nozzle assembly 18 utilized with glass sheets G and G' of two different shapes. Each of these views illustrates the nozzles that are operable and unplugged by a schematic darkened shape while the plugged nozzles are undarkened. As shown in Figure 5, the glass sheet G has a somewhat smaller shape than the glass sheet G' shown in Figure 6 and has all of the lift jet nozzles 20 within its periphery unplugged and all of the lift jet nozzles 20 outside of its periphery plugged to provide the most effective transfer operation. Furthermore, the glass sheet G' shown in Figure 6 has all of the lift jet nozzles 20 outside of its periphery plugged as are a number of lift jet nozzles 20 within its periphery while the other lift jet nozzles 20 within its periphery are operable to provide the lift jet operation. Ordinarily all of the lift jet nozzles 20 outside the periphery of the specific glass sheet shape being transferred will be plugged and most or all of the nozzles within the glass sheet periphery will be unplugged so as to be operable. Calculation and testing is performed to determine which lift jet nozzles 20 within the glass sheet periphery do not need to be operable and are thus plugged.

As shown in Figures 5 and 6, the lift jet nozzle assembly 18 includes arrays 32 of the lift jet nozzles 20, specifically five lift jet nozzles arrays 32 as shown, and also includes a plurality of conduits 34 through which the pressurized gas is respectively fed from the source 22 (Figures 1 and 2) to the different gas sheet nozzle arrays.

As illustrated in Figures 3 and 4, the plugs 30 are removed as shown in Figure 3 to unplug selected lift jet nozzles 20 and are inserted into the lift jet nozzle 20 as shown in Figure 4 to provide plugging that prevents the upward gas flow. More specifically, each lift jet nozzle, 20 includes a plug hole 36 that extends in a transverse direction to a vertical nozzle opening 38 through which the pressurized gas flows upwardly. Each lift jet nozzle 20 has a lower threaded end 40 that is threaded into a threaded hole in an associated nozzle array feed conduit 42. These feed conduits 42 of each array 32 are fed pressurized gas from the conduits 34 previously described to provide the upward glass sheet lifting.

With continuing reference to Figures 3 and 4, the plug 30 is moved from the position of Figure 3 to the position of Figure 4 into the plug hole 36 to prevent gas flow through the lift jet nozzle 20 and is removed from the plug hole as shown in Figure 3 to allow the upward gas flow for operation of the lift jet nozzle. Each plug 30 as shown has an elongated shape with a round cross section and has a spring biased ball detent 44 at its inserted end and a grasp ring 46 at its other end to facilitate the removal. This plug construction is preferred due to its simplicity and ease of insertion and removal.

## Claims

1. A method for performing one glass sheet transfer job used in cyclically forming first glass sheets of one shape and then switching to another glass sheet transfer job used in cyclically forming second glass sheets of another shape, comprising:
each glass sheet transfer job being performed by cyclically conveying the glass sheets (G) on a roll conveyor (14) to above a lift jet nozzle assembly (18) located below the conveyed glass sheet and having lift jet nozzles with vertical nozzle openings (38) through which pressurized gas can be supplied upwardly to provide upward transfer of the glass sheet (G) from the roll conveyor (14) to a downwardly facing surface (26a, 26b) of an upper support (24a, 24b) located above the conveyor;
inserting plugs (30), each with a detent (44) at the inserted end of the plug, into a through-hole (36) in lift jet nozzles (20) which are not required to supply pressurized gas to provide the upward transfer of the first glass sheet shape of the one glass sheet transfer job which can then be completed after cyclically transferring the number of glass sheets required; and
thereafter removing any plugs (30) from the plugged lift jet nozzles (20) that are required to supply pressurized gas to provide the upward transfer of the second glass sheets and adding plugs (30) to unplugged lift jet nozzles (20) that are not required to supply pressurized gas to provide the upward transfer of the second glass sheets.

2. A method for transferring glass sheets as in claim 1 wherein the plugs (30) are supplied to lift jet nozzles (20) located outside the perimeter of the shape of glass sheets being transferred for each job.

3. A method for transferring glass sheets as in claim 2 wherein the plugs (30) are also supplied to certain of the lift jet nozzles located inside the perimeter of the shape of glass sheets being transferred for at least one of the jobs.

4. A method for cyclically transferring heated glass sheets of a selected shape from a roll conveyor (14) to a downwardly facing surface (26a, 26b) of an upper support (24a, 24b) located above the roll conveyor, comprising:
conveying each heated glass sheet (G) on the roll conveyor (14) to above a lift jet nozzle assembly (18) located below the conveyed glass sheet and having lift jet nozzles with vertical nozzle openings (38) through which pressurized gas can be supplied upwardly to provide the transfer of the glass sheet from the roll conveyor to the downwardly facing surface of the upper support; and
supplying plugs (30), each with a detent (44) at the inserted end of the plug (30), into a through-hole (36) in selected lift jet nozzles (20) for which there is no need to supply upward gas flow for the selected shape of the glass sheets to be transferred whereby there is no unnecessary upward flow of pressurized gas.

5. A method for transferring glass sheets as in claim 4 wherein the plugs (30) are supplied to lift jet nozzles (20) outside the perimeter of the selected shape of glass sheets (G) being transferred.

6. A method for transferring glass sheets as in claim 5 wherein the plugs (30) are also supplied to certain of the lift jet nozzles (20) located inside the perimeter of the selected shape of glass sheets (G) being transferred.

7. A method for transferring glass sheets as in claim 4 wherein the pressurized gas is fed to lift jet nozzle arrays (32) of the lift jet nozzle assembly (18) through a plurality of conduits (34).

8. A method for transferring glass sheets as in claim 4 wherein the lift jet nozzle assembly (18) forms the glass sheet about a curved mold surface (26a) of the upper support.

9. A method for transferring glass sheets as in claim 4 wherein the lift jet nozzle assembly transfers the glass sheet to a flat transfer surface (26b) of the upper support.

10. A method for transferring glass sheets as in claim 4 wherein the plugs (30) are each inserted through a plug hole (36) that extends in a transverse direction to the vertical nozzle opening (38) of the associated lift jet nozzle (20).

11. Apparatus for cyclically transferring heated glass sheets of a selected shape from a roll conveyor (14) to a downwardly facing surface (26a, 26b) of an upper support (24a, 24b) located above the roll conveyor, comprising:
a lift jet nozzle assembly (18) located below a plane of conveyance of the conveyed glass sheet (G) and including a plurality of arrays (32) of lift jet nozzles with vertical nozzle openings (38) through which pressurized gas can be supplied upwardly to provide the transfer of each heated glass sheet from the roll conveyor (14) to the downwardly facing surface (26a, 26b) of the upper support (24a, 24b), and a plurality of conduits (34) through which pressurized gas is respectively fed to the lift jet nozzle arrays (32); and
plugs (30), each with a detent (44) at an inserted end of the plug (30), that are insertable into a through-hole (36) in a lift jet nozzle (20) to close the vertical nozzle openings of certain lift jet nozzles for which there is no need to supply upward gas flow for the selected shape of the glass sheets to be transferred whereby there is no unnecessary upward flow of pressurized gas.

12. Apparatus for transferring glass sheets as in claim 11 wherein the detent is a spring-biased ball detent (44) at the inserted end.

13. Apparatus for transferring glass sheets as in claim 11 wherein the plugs (30) are positioned in lift jet nozzles (20) located outside the perimeter of the selected shape of glass sheets being transferred.

14. Apparatus for transferring glass sheets as in claim 13 wherein the plugs (30) are also positioned in certain of the lift jet nozzles (20) located inside the perimeter of the selected shape of glass sheets (G) being transferred.

15. Apparatus for transferring glass sheets as in claim 11 wherein the upper support (24a, 24b) includes a curved mold surface (26a) or a flat transfer surface (26b) about which the lift jet nozzle assembly forms the glass sheet.

## Patentansprüche

1. Methode zum Durchführen einer Glasscheibenübertragungsarbeit, die zum zyklischen Bilden von ersten Glasscheiben einer Gestalt und daraufhin Übergehen auf eine andere Glasscheibenübertragungsarbeit, die beim zyklischen Bilden zweiter Glasscheiben anderer Gestalt eingesetzt wird, eingesetzt wird, umfassend:
dass jede Glasscheibenübertragungsarbeit durch zyklisches Transportieren der Glasscheiben (G) auf einer Walzenförderanlage (14) an einen Ort über einer Hebestrahldüsenanordnung (18) durchgeführt wird, die sich unterhalb der transportierten Glasscheibe befindet und Hebestrahldüsen mit senkrechten Düsenöffnungen (38) aufweist, durch die Druckgas aufwärts geliefert werden kann, um eine Aufwärtsübertragung der Glasscheibe (G) von der Walzenförderbandanlage (14) zu einer nach unten weisenden Fläche (26a, 26b) einer oberen Stütze (24a, 24b) bereitzustellen, die sich oberhalb der Förderanlage befindet;
das Einführen von Stöpseln (30), jeder mit einer Arretierung (44) am eingeführten Ende des Stöpsels, in eine Durchgangsbohrung (36) in Hebestrahldüsen (20), die kein Druckgas liefern müssen, um die Aufwärtsübertragung der ersten Glasscheibengestalt der einen Glasscheibenübertragungsarbeit bereitzustellen, die dann nach dem zyklischen Übertragen der erforderlichen Anzahl von Glasscheiben abgeschlossen werden kann; und
daraufhin das Entfernen irgendwelcher Stöpsel (30) aus den zugestöpselten Hebestrahldüsen (20), die erforderlich sind, um Druckgas anzuliefern, um die Aufwärtsübertragung der zweiten Glasscheiben bereitzustellen und das Hinzufügen von Stöpseln (30) zu ungestöpselten Hebestrahldüsen (20), die kein Druckgas liefern müssen, um die Aufwärtsübertragung der zweiten Glasscheiben bereitzustellen.

2. Methode zum Übertragen von Glasscheiben nach Anspruch 1, wobei die Stöpsel (30) an Hebestrahldüsen (20) geliefert werden, die sich außerhalb des Umfangs der Gestalt von Glasscheiben befinden, die für jede Arbeit übertragen werden.

3. Methode zum Übertragen von Glasscheiben nach Anspruch 2, wobei die Stöpsel (30) auch an gewisse der Hebestrahldüsen geliefert werden, die sich innerhalb des Umfangs der Gestalt von Glasscheiben befinden, die für mindestens eine der Arbeiten übertragen werden.

4. Methode zum zyklischen Übertragen erhitzter Glasscheiben einer ausgewählten Gestalt von einer Walzenförderanlage (14) zu einer nach unten weisenden Fläche (26a, 26b) eines oberen Trägers (24a, 24b), der sich über der Walzenförderanlage befindet, umfassend:
das Transportieren jeder erhitzter Glasscheibe (G) auf der Walzenförderanlage (14) an einen Ort oberhalb einer Hebestrahldüsenanordnung (18), die sich unterhalb der transportierten Glasscheibe befindet und Hebestrahldüsen mit senkrechten Düsenöffnungen (38) aufweist, durch die Druckgas aufwärts geliefert werden kann, um die Übertragung der Glasscheibe von der Walzenförderanlage zur nach unten gewandten Oberfläche des oberen Trägers bereitzustellen; und
das Liefern von Stöpseln (30), jeder mit einer Arretierung (44) am eingeführten Ende des Stöpsels (30), in eine Durchgangsbohrung (36) in ausgewählte Hebestrahldüsen (20), die keine aufwärts gerichtete Gasströmung für die ausgewählte Gestalt der Glasscheiben, die übertragen werden, liefern müssen, wodurch keine unnötige Aufwärtsströmung von Druckgas erfolgt.

5. Methode zum Übertragen von Glasscheiben nach Anspruch 4, wobei die Stöpsel (30) an Hebestrahldüsen (20) außerhalb des Umfangs der ausgewählten Gestalt von Glasscheiben (G), die übertragen werden, geliefert werden.

6. Methode zum Übertragen von Glasscheiben nach Anspruch 5, wobei die Stöpsel (30) auch an gewisse der Hebestrahldüsen (20) geliefert werden, die sich innerhalb des Umfangs der ausgewählten Gestalt von Glasscheiben (G) befinden, die übertragen werden

7. Methode zum Übertragen von Glasscheiben nach Anspruch 4, wobei das Druckgas an Hebestrahldüsengruppen (32) der Hebestrahldüsenanordnung (18) durch mehrere Verbindungsleitungen (34) geführt wird.

8. Methode zum Übertragen von Glasscheiben nach Anspruch 4, wobei die Hebestrahldüsenanordnung (18) die Glasscheibe um eine gekrümmte Formfläche (26a) des oberen Trägers bildet.

9. Methode zum Übertragen von Glasscheiben nach Anspruch 4, wobei die Hebestrahldüsenanordnung die Glasscheibe zu einer flachen Übertragungsfläche (26b) des oberen Trägers überträgt.

10. Methode zum Übertragen von Glasscheiben nach Anspruch 4, wobei die Stöpsel (30) jeweils durch ein Stöpselloch (36) eingeführt werden, das sich in querlaufender Richtung zur senkrechten Düsenöffnung (38) der assoziierten Hebestrahldüse (20) erstreckt.

11. Apparat zum zyklischen Übertragen erhitzter Glasscheiben einer ausgewählten Gestalt von einer Walzenförderanlage (14) zu einer nach unten weisenden Fläche (26a, 26b) eines oberen Trägers (24a, 24b), der sich über der Walzenförderanlage befindet, umfassend:
eine Hebestrahldüsenanordnung (18), die sich unterhalb einer Beförderungsebene der beförderten Glasscheibe (G) befindet und mehrere Gruppen (32) von Hebestrahldüsen mit senkrechten Düsenöffnungen (38) umfasst, durch die Druckgas aufwärts geliefert werden kann, um die Übertragung jeder erhitzten Glasscheibe von der Walzenförderanlage (14) zur nach unten weisenden Oberfläche (26a, 26b) des oberen Trägers (24a, 24b) bereitzustellen, und mehrere Verbindungsleitungen (34), durch die Druckgas jeweils zu den Hebestrahldüsengruppen (32) geführt wird; und
Stöpsel (30), jeder mit einer Arretierung (44) an einem eingeführten Ende des Stöpsels (30), die in eine Durchführungsbohrung (36) in einer Hebestrahldüse (20) einführbar ist, um die senkrechten Düsenöffnungen gewisser Hebestrahldüsen zu schließen, die keine aufwärts gerichtete Gasströmung für die ausgewählte Gestalt der Glasscheiben, die übertragen werden müssen, zu liefern braucht, wobei keine unnötige Aufwärtsströmung von Druckgas erfolgt.

12. Apparat zum Übertragen von Glasscheiben nach Anspruch 11, wobei die Arretierung eine federverschobene Kugelarretierung (44) an dem eingeführten Ende ist.

13. Apparat zum Übertragen von Glasscheiben nach Anspruch 11, wobei die Stöpsel (30) in Hebestrahldüsen (20) positioniert sind, die sich außerhalb des Umfangs der ausgewählten Gestalt von Glasscheiben, die übertragen werden, befinden.

14. Apparat zum Übertragen von Glasscheiben nach Anspruch 13, wobei die Stöpsel (30) auch in gewissen der Hebestrahldüsen (20) positioniert sind, die sich innerhalb des Umfangs der ausgewählten Gestalt von Glasscheiben (G), die übertragen werden, befinden.

15. Apparat zum Übertragen von Glasscheiben nach Anspruch 11, wobei der obere Träger (24a, 24b) eine gekrümmte Formfläche (26a) oder eine flache Übertragungsfläche (26b) umfasst, um die die Hebestrahldüsenanordnung die Glasscheibe bildet.

## Revendications

1. Procédé destiné à effectuer un travail de transfert de feuilles de verre utilisé dans le formage cyclique de premières feuilles de verre d'une forme spécifique, et ensuite à permuter vers un autre travail de transfert de feuilles de verre utilisé dans le formage cyclique de deuxièmes feuilles de verre d'une autre forme, comprenant les opérations suivantes :
chaque travail de transfert de feuilles de verre est réalisé en vertu du transport cyclique des feuilles de verre (G) sur un convoyeur à rouleaux (14) vers un emplacement au-dessus d'un ensemble à busettes de jet élévateur (18) positionné en dessous de la feuille de verre en cours d'acheminement et possédant des busettes à jet élévateur avec des ouvertures verticales (38) de busette à travers lesquelles du gaz pressurisé peut être fourni pour se diriger vers le haut afin d'assurer un transfert ascendant de la feuille de verre (G) à partir du convoyeur à rouleaux (14) jusqu'à une surface tournée vers le bas (26a, 26b) d'un support supérieur (24a, 24b) positionné au-dessus du convoyeur ;
insérer des obturateurs (30), chacun étant muni d'une détente (44) au niveau de l'extrémité insérée de l'obturateur, dans un trou traversant (36) ménagé dans les busettes de jet élévateur (20) qui ne sont pas nécessaires pour fournir du gaz pressurisé afin d'assurer le transfert ascendant de la première forme de feuille de verre du travail de transfert de feuilles de verre lequel peut ensuite être achevé après avoir transféré de façon cyclique le nombre requis de feuilles de verre ; et
enlever ultérieurement des obturateurs (30) sur les busettes de jet élévateur (20) obturées qui sont nécessaires pour fournir du gaz pressurisé afin d'assurer le transfert ascendant des deuxièmes feuilles de verre et ajouter des obturateurs (30) à des busettes de jet élévateur (20) non obturées qui ne sont pas nécessaires pour fournir du gaz pressurisé afin d'assurer le transfert ascendant des deuxièmes feuilles de verre.

2. Procédé de transfert de feuilles de verre selon la revendication 1, les obturateurs (30) étant montés sur des busettes de jet élévateur (20) positionnées en dehors du périmètre de la forme des feuilles de verre en train d'être transférées pour chaque travail.

3. Procédé de transfert de feuilles de verre selon la revendication 2, les obturateurs (30) étant également montés sur certaines des busettes de jet élévateur positionnées à l'intérieur du périmètre de la forme des feuilles de verre en train d'être transférées pour au moins l'un des travaux.

4. Procédé destiné au transfert cyclique de feuilles de verre chauffées ayant une forme sélectionnée à partir d'un convoyeur à rouleaux (14) jusqu'à une surface tournée vers le bas (26a, 26b) d'un support supérieur (24a, 24b) positionné au-dessus du convoyeur à rouleaux, comprenant les opérations consistant à :
transporter chaque feuille de verre chauffée (G) sur le convoyeur à rouleaux (14) vers un emplacement au-dessus d'un ensemble à busettes de jet élévateur (18) positionné en dessous de la feuille de verre en cours d'acheminement et possédant des busettes à jet élévateur avec des ouvertures verticales (38) de busette à travers lesquelles du gaz pressurisé peut être fourni pour se diriger vers le haut afin d'assurer le transfert de la feuille de verre à partir du convoyeur à rouleaux jusqu'à la surface tournée vers le bas du support supérieur ; et
poser des obturateurs (30), chacun étant muni d'une détente (44) au niveau de l'extrémité insérée de l'obturateur (30), dans un trou traversant (36) ménagé dans les busettes de jet élévateur (20) sélectionnées pour lesquelles il n'y a aucune nécessité de fournir un flux de gaz ascendant à la forme sélectionnée des feuilles de verre destinées à être transférées, cas dans lequel il n'existe aucun flux ascendant inutile de gaz pressurisé.

5. Procédé de transfert de feuilles de verre selon la revendication 4, les obturateurs (30) étant montés sur des busettes de jet élévateur (20) en dehors du périmètre de la forme sélectionnée des feuilles de verre (G) en train d'être transférées.

6. Procédé de transfert de feuilles de verre selon la revendication 5, les obturateurs (30) étant également montés sur certaines des busettes de jet élévateur (20) positionnées à l'intérieur du périmètre de la forme sélectionné des feuilles de verre (G) en train d'être transférées.

7. Procédé de transfert de feuilles de verre selon la revendication 4, le gaz pressurisé étant acheminé à des groupes de busettes de jet élévateur (32) de l'ensemble à busettes de jet élévateur (18) à travers une pluralité de conduits (34).

8. Procédé de transfert de feuilles de verre selon la revendication 4, l'ensemble à busettes de jet élévateur (18) formant la feuille de verre autour d'une surface de moulage incurvée (26a) du support supérieur.

9. Procédé de transfert de feuilles de verre selon la revendication 4, l'ensemble à busettes de jet élévateur transférant la feuille de verre vers une surface de transfert plane (26b) du support supérieur.

10. Procédé de transfert de feuilles de verre selon la revendication 4, les obturateurs (30) étant chacun insérés à travers un trou (36) d'obturateur qui s'étend suivant un sens transversal jusqu'à l'ouverture verticale (38) de busette sur la busette de jet élévateur (20) associée.

11. Appareil destiné à effectuer le transfert cyclique de feuilles de verre chauffées ayant une forme sélectionnée à partir d'un convoyeur à rouleaux (14) jusqu'à une surface tournée vers le bas (26a, 26b) d'un support supérieur (24a, 24b) positionné au-dessus du convoyeur à rouleaux, comprenant :
un ensemble à busettes de jet élévateur (18) lequel est positionné en dessous d'un plan de transport de la feuille de verre (G) en cours d'acheminement et comportant une pluralité de groupes (32) de busettes de jet élévateur avec des ouvertures verticales (38) de busette à travers lesquelles du gaz pressurisé peut être fourni pour se diriger vers le haut afin d'assurer le transfert de chaque feuille de verre chauffée à partir du convoyeur à rouleaux (14) jusqu'à la surface tournée vers le bas (26a, 26b) du support supérieur (24a, 24b), et une pluralité de conduits (34) à travers lesquels du gaz pressurisé est respectivement acheminé vers les groupes (32) de busettes de jet élévateur, et
des obturateurs (30), chacun étant muni d'une détente (44) au niveau d'une extrémité insérée de l'obturateur (30), lesquels sont insérables dans un trou traversant (36) ménagé dans une busette de jet élévateur (20) afin de fermer les ouvertures verticales de busette sur certaines busettes de jet élévateur pour lesquelles il n'y a aucune nécessité de fournir un flux de gaz ascendant à la forme sélectionnée des feuilles de verre destinées à être transférées, cas dans lequel il n'existe aucun flux ascendant inutile de gaz pressurisé.

12. Appareil de transfert de feuilles de verre selon la revendication 11, la détente étant une détente à bille (44) agissant sous la poussée d'un ressort prévue au niveau de l'extrémité insérée.

13. Appareil de transfert de feuilles de verre selon la revendication 11, les obturateurs (30) étant positionnés dans les busettes de jet élévateur (20) disposées en dehors du périmètre de la forme sélectionnée des feuilles de verre en train d'être transférées.

14. Appareil de transfert de feuilles de verre selon la revendication 13, les obturateurs (30) étant également positionnés dans certaines des busettes de jet élévateur (20) positionnées à l'intérieur du périmètre de la forme sélectionné des feuilles de verre (G) en train d'être transférées.

15. Appareil de transfert de feuilles de verre selon la revendication 11, le support supérieur (24a, 24b) comportant une surface de moulage incurvée (26a) ou une surface de transfert plane (26b) autour de laquelle l'ensemble à busettes de jet élévateur forme la feuille de verre.
